# EUROPEAN PATENT APPLICATION

(11) **EP 2 456 206 A2**
(43) Date of publication of application: **23.05.2012**
(21) Application number: 11168955.0
(22) Date of filing: 07.06.2011
(51) Int. Cl.: H04N 9/31, G06F 3/01

(54) **Display apparatus and control method thereof**

(30) Priority: 22.11.2010 KR 20100116004
(71) Applicant: Samsung Electronics Co., Ltd., Yeoungtong-gu Suwon-si, Gyeonggi-do (KR)
(72) Inventor: Jang, Jong-hyuk, Gyeonggi-do (KR); Park, Seung-kwon, Gyeonggi-do (KR)
(74) Representative: Bruce, Alexander Richard Henry

(57) **Abstract**

A display apparatus and a control method thereof, are provided. The display apparatus includes: a camera which detects a coordinate of light projected on a screen by a pointing device projecting a light beam; an image processor which processes an image to be displayed on the screen, the image corresponding to the coordinate of the light detected by the camera; an optical filter which is disposed on a path of the light entering the camera to be detected by the camera and transmits light having a first wavelength to the camera by reducing of an amount of the light at a preset ratio; and a controller which determines a characteristic of the detected light according to a wavelength based on a brightness level of the light entering through the optical filter and detected by the camera.

## Description

The present invention relates to a display apparatus including a pointing device which projects a light beam onto a screen, and a control method thereof, and more particularly, to a display apparatus which determines characteristics of light projected on the screen by a pointing device, and a control method thereof.

A display apparatus is a device which performs various processes on image signals or image data input from an external source or stored internally, and which are displayed as images on a panel or a screen, and may be configured in various types, such as a television (TV), a monitor, a portable media player, or the like. The display apparatus may be configured as an electronic blackboard which detects a trace formed on the screen and displays an image based on the trace.

The display apparatus configured as an electronic blackboard may include a device which has a pressure sensing touch screen to detect pressure on the screen, and a device which detects a coordinate of light formed as a projected area on a screen by a light beam projected from a pointing device using a camera.

In the latter type of the display apparatus, the light beam projected to the screen may have an infrared or visible light wavelength based on a type of the pointing device. Generally, infrared light tends to diffuse, while visible light tends to go straight and parallel. Thus, a pointing device projecting an infrared light beam is suitably used for a relatively short distance to the screen, whereas a pointing device projecting a visible light beam is suitably used for a relatively long distance to the screen.

Aspects of one or more exemplary embodiments may be achieved by providing a display apparatus including: a camera which detects a coordinate of light projected on a screen by a pointing device projecting a light beam; an image processor which processes an image to be displayed on the screen, the image corresponding to the coordinate of the light detected by the camera; an optical filter which is disposed on a path of the light entering the camera to be detected by the camera and transmits light having a first wavelength to the camera via reduction of an amount of the light at a preset ratio; and a controller which determines a characteristic of the detected light according to a wavelength based on a brightness level of the light entering through the optical filter and detected by the camera.

The first wavelength may be a visible light wavelength.

The detected light may include a characteristic of an infrared light wavelength and a characteristic of a visible light wavelength.

The controller may preset a first brightness range corresponding to the light having a visible light wavelength formed by the pointing device and a second brightness range which is higher than the first brightness range and corresponds to the light having an infrared light wavelength formed by the pointing device, and determine whether the characteristic of the detected light corresponds to the brightness level of the first brightness range or the brightness level of the second brightness range.

The controller may preset a third brightness range which is lower than the first brightness range and corresponds to the image displayed on the screen by the image processor, and determine whether the characteristic of the detected light corresponds to the brightness level of the first brightness range, the brightness level of the second brightness range, or the brightness level of the third brightness range.

The optical filter may reduce an amount of the light having a visible light wavelength entering the camera so that a maximum brightness level of the light having the visible light wavelength entering the camera is less than a usable brightness range of the light beam having an infrared light wavelength projected from the pointing device.

The optical filter may reduce the amount of the light having the visible light wavelength entering the camera by 5 to 50 percent.

The image processor may be set to perform a preset operation corresponding to the characteristic of the light, and the controller may control the image processor to selectively perform the preset operation corresponding to the characteristic of the detected light.

The image processor may be configured in a projection device.

Another aspect of one or more exemplary embodiments may be achieved by providing a control method of a display apparatus including a camera to detect a coordinate of light projected on a screen by a pointing device projecting a light beam and an image processor to process an image to be displayed on the screen, the image corresponding to the coordinate of the light detected by the camera, the control method including: detecting, by the camera, light passing through an optical filter which reduces an amount of light having a first wavelength at a preset ratio; and determining a characteristic of the detected light according to a wavelength based on a brightness level of the light entering through the optical filter and detected by the camera.

The first wavelength may be a visible light wavelength.

The detected light may include one characteristic of an infrared light wavelength and a visible light wavelength.

The control method may further include presetting a first brightness range corresponding to the light having a visible light wavelength formed by the pointing device and a second brightness range being higher than the first brightness range and corresponding to the light having an infrared light wavelength formed by the pointing device, and the determining the characteristic of the detected light according to the wavelength may determine if the characteristic of the detected light corresponds to the brightness level of the first brightness range or the brightness level of the second brightness range.

The presetting the first brightness range and the second brightness range may include presetting, by the image processor, a third brightness range which is lower than the first brightness range and corresponding to the image displayed on the screen, and the determining the characteristic of the detected light may determine if the characteristic of the detected light corresponds to the brightness level of the first brightness range, the brightness level of the second brightness range, or the brightness level of the third brightness range.

The optical filter may reduce an amount of the light having a visible light wavelength entering the camera so that a maximum brightness level of the light having the visible light wavelength entering the camera is less than a usable brightness range of the light beam having an infrared light wavelength projected from the pointing device.

The optical filter may reduce the amount of the light having the visible light wavelength entering the camera by 5 to 50 percent.

The determining the characteristic of the detected light according to the wavelength may include selectively performing a preset operation corresponding to the characteristic of the detected light.

The above and/or other aspects will become apparent and more readily appreciated from the following description of the exemplary embodiments, taken in conjunction with the accompanying drawings, in which:
FIG. 1 illustrates an example of a display system according to an exemplary embodiment.
FIG. 2 is a block diagram illustrating a configuration of a display apparatus of the display system of FIG. 1.
FIG. 3 is a graph illustrating a brightness level of light by characteristics before the light enters an optical filter in the display apparatus.
FIG. 4 is a graph illustrating a brightness level of light by characteristics when the light is detected by a camera via an optical filter in the display apparatus.
FIG. 5 is a flowchart illustrating a control method of the display apparatus of FIG. 1.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

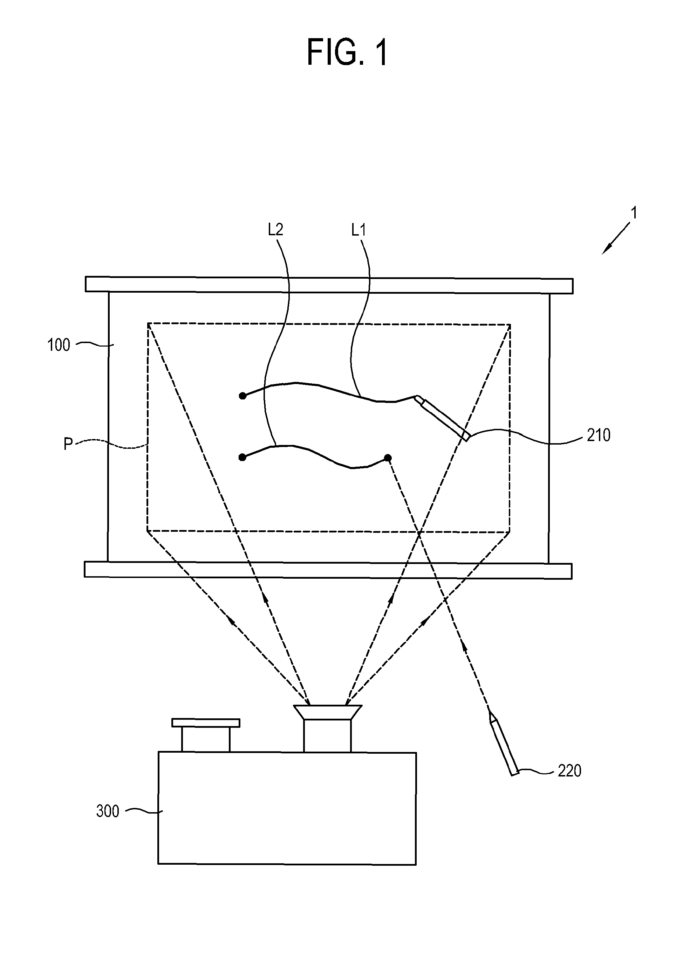

FIG. 1 illustrates an example of a display system 1 according to an exemplary embodiment.

As shown in FIG. 1, the display system 1 according to the present exemplary embodiment includes a screen 100, pointing devices 210 and 220 which project light beams and form traces L1 and L2 of the light beams on the screen 100, and a display apparatus 300 processing an image P corresponding to coordinates L1 and L2 of the light beams formed as projected areas on the screen 100 to be displayed on the screen 100. In the present exemplary embodiment, the display apparatus 300 is a projection type, projecting an image P on the screen 100 to display the large-screen image P.

The screen 100 is held or installed on an installation surface substantially upright, such as a wall, and displays the image P projected from the display apparatus 300 on a surface. The screen 100 may have various sizes and colors as long as the image P projected from the display apparatus 300 is displayed. For example, the screen 100 may be white so that the image P is more clearly displayed and the traces L1 and L2 of the light beams are easily detected.

The screen 100 may include flexible materials to ease installation and removal on the installation surface or solid materials to be fixed on the installation surface, but is not limited thereto.

The pointing devices 210 and 220 generate a light beam and project the generated light beam in a predetermined direction. The pointing devices 210 and 220 may be a bar shape held by a user, and the user may control generation of a light beam and a projecting direction. The pointing devices 210 and 220 may generate a light beam of infrared light that is in a wavelength of 780 nm to 1200 nm or generate a light beam of visible light that is in a wavelength of 400 nm to 780 nm depending on a type. Alternatively, the pointing devices 210 and 220 may be configured to selectively generate a light beam of infrared light or visible light.

Here, the light beam of visible light may be a laser, but is not limited thereto.

Among a pointing device 210 projecting an infrared light beam and a pointing device 220 projecting a visible light beam, the user may selectively use the pointing devices 210 and 220 based on a relative distance of the pointing devices 210 and 220 to the screen 100.

The selective use of the pointing devices 210 and 220 is made due to differences in characteristics between infrared light and visible light, wherein infrared light tends to diffuse, whereas visible light tends to go straight and parallel. Thus, when a distance between the screen 100 and the pointing device 210 is relatively short, infrared light having superior diffusion to visible light is favorable for detecting light L1 formed as a projected area on the screen 100. On the contrary, when a distance between the screen 100 and the pointing device 220 is relatively long, visible light going straight is favorable for detecting light L2 formed as a projected area on the screen 100 since infrared light diffuses, and thus may not easily be converged on the screen 100, when the screen 100 is relatively far from the pointing device 210.

Thus, the user uses the pointing device 210 to project a light beam having an infrared light wavelength when the pointing device 210 is positioned relatively close to the screen 100, and uses the pointing device 220 to project a light beam having a visible light wavelength when the pointing device 220 is positioned relatively far away from the screen 100.

The display apparatus 300 detects a light beam on the screen 100 and projects an image P corresponding to coordinates L1 and L2 of the detected light beams on the screen 100. For example, when the user projects a light beam on the screen 100 using the pointing devices 210 and 220, the display apparatus 300 calculates coordinates of traces L1 and L2 of the light beams projected on the screen 100 and projects an image P including a trace of lines drawn along the calculated coordinates on the screen 100. Accordingly, the light beams drawn by the user with the pointing devices 210 and 220 are displayed as the image P on the screen 100.

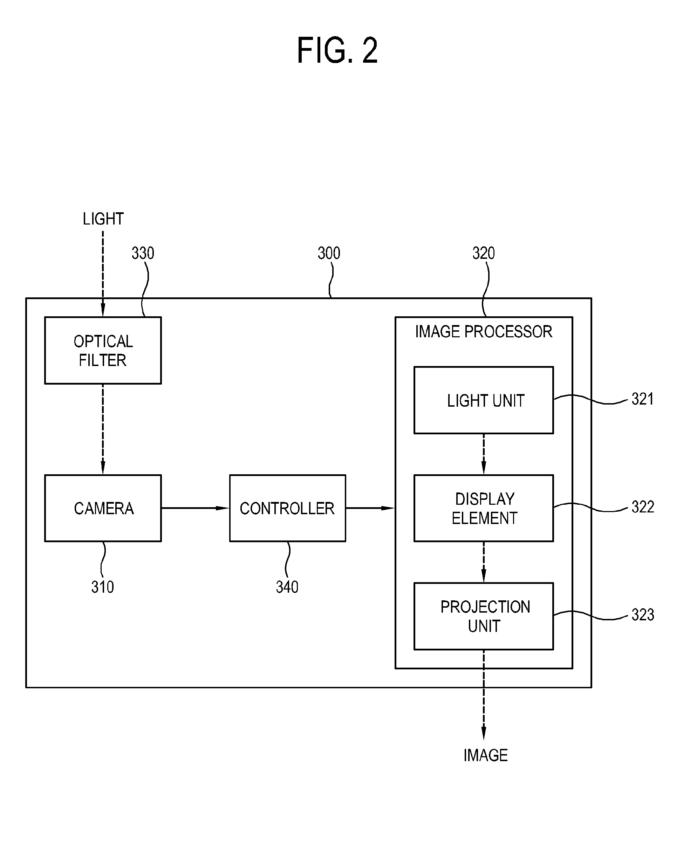

However, since characteristics of the light beams projected by the pointing devices 210 and 220 are different, the display apparatus 300 detects the characteristics of the light beams and selectively performs a preset image processing operation corresponding to the detected characteristics. In order to selectively perform the image processing operation, the display apparatus 300 has the following configuration to determine characteristics of light projected on the screen 100, and the configuration of the display apparatus 300 is described with reference to FIG. 2. FIG. 2 is a block diagram illustrating the configuration of the display apparatus 300.

As shown in FIG. 2, the display apparatus 300 of the present exemplary embodiment includes a camera 310 to detect coordinates L1 and L2 of light formed as projected areas on the screen 100 by the pointing devices 210 and 220 projecting light beams, an image processor 320 to process an image corresponding to the coordinates L1 and L2 of the light detected by the camera 310 to be displayed on the screen 100, an optical filter 330 to be disposed on a path of light entering the camera 310 to detect the camera 310 and to transmit light having a visible light wavelength to the camera 310 via reduction of an amount of the light at a preset ratio, and a controller 340 to determine characteristics of light according to a wavelength based on a level of a brightness of the light entering through the optical filter 330 and detected by the camera 310.

When the light beams projected from the pointing devices 210 and 220 are formed as the projected areas on the screen 100, the camera 310 receives light reflected on the screen 100 to calculate the coordinates L1 and L2 of traces of the light beams on the screen 100 by the controller 340. To this end, the camera 310 includes a lens (not shown) to receive light and a complementary metal oxide semiconductor (CMOS) or charge-coupled device (CCD) image sensor (not shown) to detect light entering through the lens.

In the present exemplary embodiment, the camera 310 is included in the display apparatus 300 but is not limited thereto. For example, the camera 310 may be configured as an independent component communicating with the display apparatus 300.

The image processor 320 performs various processes on image signals or image data input from an external source to be displayed as images on the screen 100. Further, the image processor 320 may process an image corresponding to a coordinate of light detected by the camera 310 to be displayed on the screen 100 according to control of the controller 340.

The image processor 320 may be configured in various types but is realized as a projection type in the present exemplary embodiment. The image processor 320 includes a light unit 321 to generate and emit light, a display element 322 to display an image on a plate based on the light emitted from the light unit 321, and a projection unit 323 to project the image displayed on the display element 322 onto the screen 100 in an enlarged manner.

The light unit 321 includes a light source (not shown) to generate light and an optical lens (not shown) to variously adjust characteristics of light from the light source, for example, by parallelizing, uniformizing, polarizing, or collecting the light, and to emit the light to the display element 322. A plurality of optical lenses are disposed along the path of light to correct aberration.

The display element 322 selectively transmits or reflects light emitted from the light unit 321 to form an image. The display element 322 may be configured as a reflective display device which selectively reflects entering light by each pixel unit to form an image or as a transmissive liquid crystal display (LCD) which selectively transmits entering light by each pixel unit to form an image. The reflective display element includes a digital micro-mirror device (DMD), a liquid crystal on silicon (LCOS) device, or the like.

The projection element 323 enlarges an image formed in the display element 322 by various lens (not shown) disposed along the path of light to be projected on the screen 100, so that the image formed in the display element 322 is displayed on the screen 100 in an enlarged manner.

The optical filter 330 is installed on the path of light entering the camera 310. The optical filter 330 may be installed in any position where the optical filter 330 filters light received by the camera 310. For example, the optical filter 330 may be coupled to the lens which receives light of the camera 310.

The optical filter 330 reduces light having a visible light wavelength at a preset ratio and transmits the light. However, the optical filter 330 does not reduce light having an infrared light wavelength but transmits substantially 100 percent of the infrared light.

A ratio of the light having the visible light wavelength reduced by the optical filter 330 may be modified in various ways based on a type of device and environments and may not be limited to a specific value. However, the optical filter 330 reduces an amount of the light having the visible light wavelength entering the camera 310 so that a maximum brightness level of the light having the visible light wavelength entering the camera 310 is less than a usable brightness range of a light beam having an infrared light wavelength projected from the pointing device 210.

Here, the usable brightness range refers to a brightness range of a light beam projected by the pointing device 210 in a normal state, and is lower than a maximum brightness level by a predetermined level or between the maximum brightness level and a brightness level lower than the maximum brightness level by the predetermined level.

That is, the optical filter 330 adjusts the brightness level of the light having the visible light wavelength to be lower than a brightness level of light having the infrared light wavelength by the predetermined level when light enters the camera 310 through the optical filter 330, which will be further described.

The controller 340 controls the image processor 320 to display an image corresponding to a coordinate of light detected by the camera 310 through the optical filter 330. The controller 340 determines characteristics of light according to a wavelength based on a brightness level of the light and controls the image processor 320 to selectively perform an operation based on a determination result.

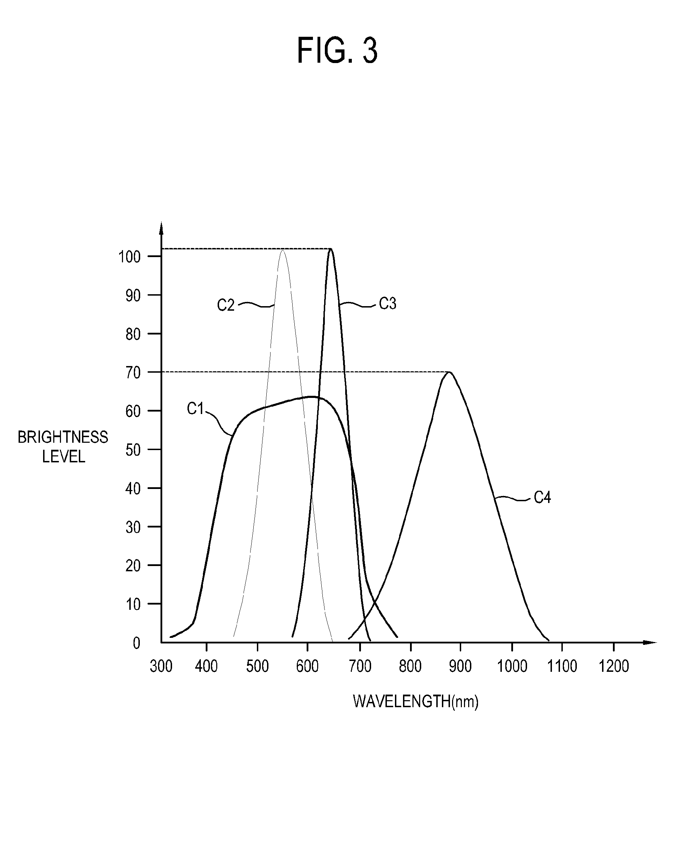

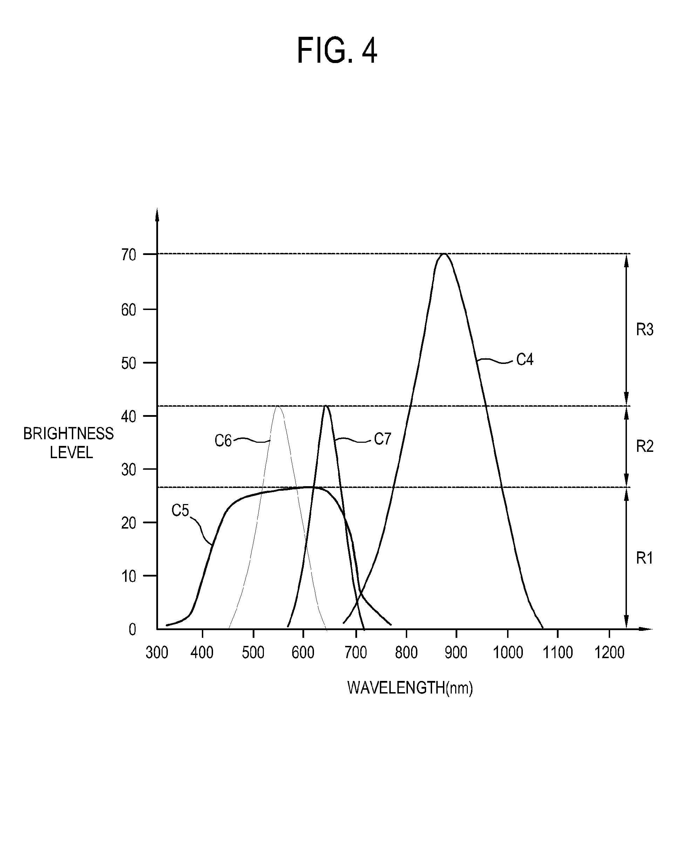

Hereinafter, a method of the controller 340 determining characteristics of light according to a wavelength detected by the camera 310 is further described with reference to FIGS. 3 and 4.

FIG. 3 is a graph illustrating a brightness level of light by characteristics before the light enters the optical filter 330 in the display apparatus 300.

In the graph of FIG. 3, a horizontal axis refers to a wavelength in nanometer (nm), and a vertical axis refers to a brightness level. The vertical axis is for relative comparison and thus does not have a unit.

Curves C1, C2, C3, and C4 denote a brightness level output by a component or the devices 320, 210, and 220 generating light. A curve C1 denotes a brightness level of an image P according to a wavelength, the image P being displayed by the image processor 320 on the screen 100. That is, the image processor 320 may display the image P having a brightness level within the curve C1 with respect to a wavelength.

A curve C2 denotes a brightness level of a green light beam having a visible light wavelength projected by the pointing device 220, and a curve C3 denotes a brightness level of a red light beam having a visible light wavelength projected by the pointing device 220. The curves C2 and C3 are positioned in a visible light wavelength range but have different wavelength ranges, and thus the curves C2 and C3 have different colors. However, the curves C2 and C3 have substantially the same change with respect to the vertical axis.

A curve C4 denotes a brightness level of a light beam having an infrared light wavelength projected by the pointing device 210.

Observing the brightness levels of the respective curves C1, C2, C3, and C4, the light beams having the visible light wavelengths by the pointing device 220 have a maximum brightness level of 100, which is the highest, the light beam having the infrared light wavelength by the pointing device 210 has a maximum brightness level of 70, and the image P by the image processor 320 has a maximum brightness level of nearly 70. Generally, in the same wavelength range, since the image P by the image processor 320 has a lower brightness level than the light beam by the pointing device 220, the curve C1 has a lower value on the vertical axis than the curves C2 and C3.

Without the optical filter 330, a brightness of light detected by the camera 310 shows a graph having a pattern described above. In this instance, it is not easy to determine which one of the image processor 320, the pointing device 220 projecting a visible light beam, and the pointing device 210 projecting an infrared light beam the light having a predetermined coordinate detected by the camera 310 is formed by.

FIG. 4 is a graph illustrating a brightness level of light by characteristics when the light is detected by the camera 310 via the optical filter 330 in the display apparatus 300.

As shown in FIG. 4, when the light is detected by the camera 310 via the optical filter 330, light having a visible light wavelength is reduced at a preset ratio. The reduced ratio is not limited but is set so that a maximum brightness level of a light beam having a visible light wavelength projected from the pointing device 220 is less than a usable brightness range of a light beam having an infrared light wavelength projected from the pointing device 210. Although not limited to a specific value, the optical filter 330 reduces an amount of the light having the visible light wavelength entering the camera 310 by 5 to 50 percent. When the ratio is out of the range, it is not easy to separately determine the characteristics of the light according to a wavelength.

Compared with the graph of FIG. 3, the brightness level of the image P by the image processor 320 is reduced from the curve C1 to a curve C5, the brightness level of the green light beam by the pointing device 220 is reduced from the curve C2 to a curve C6, and the brightness level of the red light beam by the pointing device 220 is reduced from the curve C3 to a curve C7.

The curve C4, which is the brightness level of the infrared light beam by the pointing device 210, is substantially the same as in FIG. 3 since an amount of light is not reduced by the optical filter 330.

The controller 340 presets a first brightness range R1 corresponding to the image P displayed on the screen 100 by the image processor 320, a second brightness range R2 corresponding to the light beam having the visible light wavelength by the pointing device 220, and a third brightness range R3 corresponding to the light beam having the infrared light wavelength by the pointing device 210.

The brightness ranges R1, R2, and R3 are changed based on a type of device and environments and are not limited to specific values. However, the first brightness range R1 has a lowest brightness level, the second brightness range R2 is higher than the first brightness range R1, and the third brightness range R3 is higher than the second brightness range R2.

The controller 340 calculates a brightness level of light having a coordinate detected by the camera 310 and determines which the calculated brightness level of the light corresponds to among the first brightness range R1, the second brightness range R2, and the third brightness range R3 to determine a characteristic of the light. That is, the controller 340 determines the light as the image P by the image processor 320 when the brightness level of the light corresponds to the first brightness range R1. The controller 340 determines the light as the light beam having the visible light wavelength by the pointing device 220 when the brightness level corresponds to the second brightness range R2. The controller 340 determines the light as the light beam having the infrared light wavelength by the pointing device 210 when the brightness level corresponds to the third brightness range R3.

As described above, in the present exemplary embodiment, among light entering the camera 310, only light having a visible light wavelength is reduced at a preset ratio by the optical filter 330, and thus a brightness level of the light having the visible light wavelength processed by the image processor 320 and output by the pointing device 220 is adjusted to be lower than a brightness level of light having an infrared light wavelength.

The controller 340 presets a brightness range of the light having the visible light wavelength to be lower than a brightness range of the light having the infrared light wavelength and compares a brightness level of light detected by the camera 310 with the preset brightness ranges to determine a characteristic of the light according to a wavelength. That is, the controller 340 calculates only the brightness level of the light detected by the camera 310 to determine a characteristic of the light according to a wavelength.

When the characteristic of the light is determined, the controller 340 controls the image processor 320 to selectively perform a preset operation in performing image processing operations on the light.

For example, when the light corresponds to the image P, the image processor 320 may perform an image processing operation based on an application to correct a position of the image P within the screen 100. Alternatively, when the light corresponds to the light beam having the visible light wavelength by the pointing device 220, the image processor 320 may perform an image processing operation based on an application associated with control of drawing simple lines or figures and presentation, and recognition of an operation. Further, when the light corresponds to the light beam having the infrared light wavelength by the pointing device 210, the image processor 320 may perform an image processing operation based on an application associated with relatively complicated pictures or letters.

The controller 340 controls the image processor 320 to selectively perform the above image processing operations based on characteristics of light detected by the camera 310.

According to the above method of the present exemplary embodiment, characteristics of light detected by the camera 310 according to a wavelength may be easily determined.

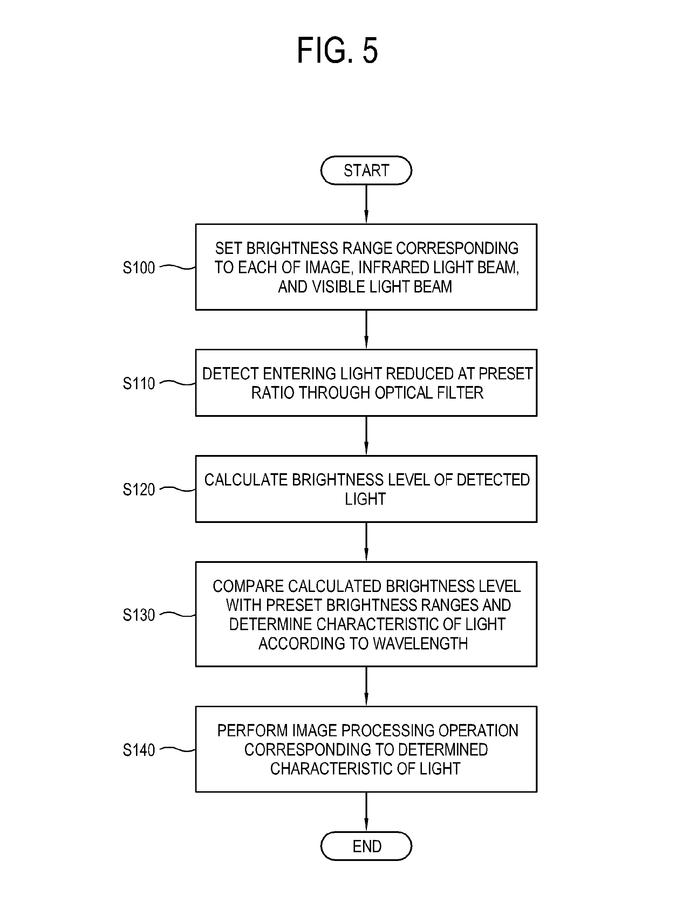

Hereinafter, a control method of the display apparatus 300 is described with reference to FIG. 5. FIG. 5 is a flowchart illustrating the control method of the display apparatus 300.

As shown in FIG. 5, the controller 340 sets a brightness range corresponding to each of an image, an infrared light beam, and a visible light beam (operation S100).

When entering light reduced at a preset ratio through the optical filter 330 is detected by the camera 310 (operation S110), the controller 340 calculates a coordinate and a brightness level of the detected light (operation S120).

The controller 340 compares the calculated brightness level with the brightness ranges set in operation S100 to determine a characteristic of the light according to a wavelength (operation S130).

The image processor 320 performs an image processing operation corresponding to the determined characteristic of the light according to control by the controller 340 (operation S140). Then, the image processor 320 performs a process so that an image corresponding to the coordinate of the light is displayed on the screen 100.

Although a few exemplary embodiments have been shown and described, it will be appreciated by those skilled in the art that changes may be made in these exemplary embodiments without departing from the principles of the inventive concept, the scope of which is defined in the appended claims. For example, the above exemplary embodiments are described with a TV as an illustrative example, but the display apparatus of the exemplary embodiments may be configured as a smart phone, a mobile phone, and the like.

## Claims

1. A display apparatus comprising:
a camera which detects a coordinate of light projected on a screen by a pointing device which projects a light beam;
an image processor which processes an image to be displayed on the screen, the image corresponding to the coordinate of the light detected by the camera;
an optical filter which is disposed on a path of the light entering the camera to be detected by the camera and transmits light having a first wavelength to the camera by reducing an amount of the light at a preset ratio; and
a controller which determines a characteristic of the detected light according to a wavelength based on a brightness level of the light entering through the optical filter and detected by the camera.

2. The display apparatus of claim 1, wherein the first wavelength is a visible light wavelength.

3. The display apparatus of claim 2, wherein the detected light comprises at least one of a characteristic of an infrared light wavelength and a characteristic of a visible light wavelength.

4. The display apparatus of claim 3, wherein the controller presets a first brightness range which corresponds to the light having a visible light wavelength formed by the pointing device and a second brightness range which is higher than the first brightness range and corresponds to the light having an infrared light wavelength formed by the pointing device, and determines if the characteristic of the detected light corresponds to the brightness level of the first brightness range or the brightness level of the second brightness range.

5. The display apparatus of claim 4, wherein the controller presets, by the image processor, a third brightness range which is lower than the first brightness range and corresponds to the image displayed on the screen, and determines if the characteristic of the detected light corresponds to the brightness level of the first brightness range, the brightness level of the second brightness range, or the brightness level of the third brightness range.

6. The display apparatus of claim 2, wherein the optical filter reduces an amount of the light having a visible light wavelength entering the camera so that a maximum brightness level of the light having the visible light wavelength entering the camera is less than a usable brightness range of the light beam having an infrared light wavelength projected from the pointing device.

7. The display apparatus of claim 6, wherein the optical filter reduces the amount of the light having the visible light wavelength entering the camera by 5 to 50 percent.

8. The display apparatus of claim 1, wherein the image processor performs a preset operation corresponding to the characteristic of the light, and the controller controls the image processor to selectively perform the preset operation corresponding to the characteristic of the detected light.

9. The display apparatus of claim 1, wherein the image processor is configured in a projection device.

10. A control method of a display apparatus, the control method comprising:
detecting, by a camera, light passing through an optical filter reducing an amount of light having a first wavelength at a preset ratio; and
determining a characteristic of the detected light according to a wavelength based on a brightness level of the light passing through the optical filter and detected by the camera.

11. The control method of claim 10, wherein the first wavelength is a visible light wavelength.

12. The control method of claim 11, wherein the detected light comprises at least one of a characteristic of an infrared light wavelength and a characteristic of a visible light wavelength.

13. The control method of claim 12, further comprising presetting a first brightness range corresponding to the light having a visible light wavelength formed by the pointing device and a second brightness range which is higher than the first brightness range and corresponds to the light having an infrared light wavelength formed by the pointing device, wherein the determining the characteristic of the detected light according to the wavelength determines if the characteristic of the detected light corresponds to the brightness level of the first brightness range or the brightness level of the second brightness range.

14. The control method of claim 13, wherein the presetting the first brightness range and the second brightness range comprises presetting, by the image processor, a third brightness range which is lower than the first brightness range and corresponds to the image displayed on the screen, and the determining the characteristic of the detected light determines if the characteristic of the detected light corresponds to the brightness level of the first brightness range, the brightness level of the second brightness range, or the brightness level of the third brightness range.

15. The control method of claim 11, wherein the optical filter reduces an amount of the light having a visible light wavelength entering the camera so that a maximum brightness level of the light having the visible light wavelength entering the camera is less than a usable brightness range of the light beam having an infrared light wavelength projected from the pointing device.
